# EUROPEAN PATENT SPECIFICATION

(11) **EP 1 890 482 B1**
(45) Date of publication and mention of the grant of the patent: **24.12.2008**
(21) Application number: 07014108.0
(22) Date of filing: 18.07.2007
(51) Int. Cl.: H04N 5/232

(54) **Lens device**
Objektiv
Dispositif à lentille

(30) Priority: 17.08.2006 JP 2006222626
(43) Date of publication of application: 20.02.2008
(73) Proprietor: Fujinon Corporation, Saitama-shi, Saitama (JP)
(72) Inventor: Hirakawa, Akinobu, Saitama (JP); Toyama, Nobuaki, Saitama (JP)
(74) Representative: Klunker . Schmitt-Nilson . Hirsch

(56) References cited:
- JP-A- 9 236 743
- JP-A- 58 063 903
- JP-A- 2006 119 199
- JP-A- 2006 171 290
- US-B1- 7 209 175

## Description

### BACKGROUND OF THE INVENTION

### Field of the Invention

The present invention relates to a lens device, and more particularly to a lens device having an image shake correction function and an autofocus (AF) function, wherein an imaging optical system for focusing a subject image for recording or reproduction includes a vibration proof optical system for image shake correction and a light splitting optical system for AF use.

### Description of the Related Art

As the image shake correction function for a broadcast-use television camera or the like, there has been known one which arranges an vibration proof lens of the imaging optical system for focusing a subject image, in a movable manner on a plane orthogonal to the optical axis, and when a vibration is applied to the camera, drives the vibration proof lens by use of an actuator so as to cancel the image shake caused by the vibration; thereby correcting the image shake (for example, refer to Japanese Patent Application Laid-Open Nos. 2001-142103 and 2003-107554). As the shake detection sensor that detects a vibration applied to the camera, an angular velocity sensor is used, for example; an angular velocity signal obtained from the angular velocity sensor is integrated to determine a position (a displacement from the reference position) of the vibration proof lens for canceling the image shake and then the vibration proof lens is driven accordingly.

As the autofocus (AF) function used in a broadcast-use television camera or the like, there has typically been known a contrast type AF which performs automatic focusing so as to achieve a highest image contrast. As the contrast type AF, an optical path length difference type AF illustrated in Japanese Patent Application Laid-Open No. 2004-212458 has been put into practical use. According to this, a light splitting optical system such as a half mirror is arranged in the imaging optical system to split the optical path into two. Using subject light guided to one optical path (main optical path), a subject image for recording or reproduction is focused on the imaging area of an imaging element (imaging element for video use) of the camera body arranged for capturing an image (video image) for recording or reproduction. Using subject light guided to the other optical path (optical path for AF use), a subject image for AF use is focused on the imaging area of an imaging element (imaging element for AF use) arranged for capturing an image for AF use.

The imaging area of the imaging element for AF use consists of two imaging areas disposed at positions of a different optical path length from each other, implemented by using, for example, two imaging elements; the subject light guided to the optical path for AF use is further divided and is incident on the respective imaging areas of the imaging element for AF use. The images captured by the respective imaging areas of the imaging element for AF use correspond to an image captured by the imaging area of the video imaging element when the focus is displaced a predetermined amount from the current position. Thus, focus evaluation values are determined from each image captured by the respective imaging areas of the imaging element for AF use and then compared to each other, whereby a focusing state (in-focus, front focus, rear focus) at the current focusing position with respect to the imaging area of the video imaging element is detected. Focusing is automatically performed by controlling the focus of the imaging optical system so that the focusing state becomes in focus.

Such optical path length difference type AF can be mounted as an AF function into a lens device; even when the camera body has no AF function mounted therein, focusing by AF is possible.

In conventional art, in the case of a lens device provided with the above described image shake correction function and AF function (optical path length difference type), a vibration proof optical system (vibration proof lens or the like) for image shake correction and a light splitting optical system (half mirror or the like) for AF use are arranged in the imaging optical system (main optical path). Conventionally, the vibration proof optical system is disposed at the final stage of the imaging optical system, so the light splitting optical system for AF use is disposed at a preceding stage (subject side) relative to the vibration proof optical system. Accordingly, the subject image for AF use captured by the imaging element for AF use is focused using subject light which has not yet passed through the vibration proof optical system; no image shake correction has been applied thereto. However, similarly to the subject image for recording or reproduction captured by the imaging element for video use of the camera body, it is preferable that image shake correction is also applied to the subject image for AF use.

The present invention has been devised in view of these circumstances, and an object thereof is to provide a lens device provided in an imaging optical system thereof with a vibration proof optical system for image shake correction and a light splitting optical system for AF use, wherein image shake correction is also effectively applied to a subject image for AF use focused using subject light branched by the light splitting optical system for AF use.

### SUMMARY OF THE INVENTION

To achieve the above object, according to a first aspect of the present invention, there is provided a lens device with an imaging optical system in which a vibration proof optical system for image shake correction is arranged in a main optical path for focusing a subject image for recording or reproduction and at the same time a light splitting optical system for branching subject light from the main optical path to an optical path for AF use for focusing a subject image for AF use is arranged in the main optical path, wherein the light splitting optical system is disposed at a rear stage of the main optical path relative to the vibration proof optical system. According to the present invention, image shake correction can also be effectively applied to a subject image for AF use.

According to a second aspect of the present invention, there is provided the lens device according to the first aspect of the present invention, wherein the vibration proof optical system and the light splitting optical system are supported by the same supporting frame detachably mounted. According to the present invention, the vibration proof optical system and light splitting optical system can be incorporated into the imaging optical system of the lens device after being integrated as one unit.

According to a third aspect of the present invention, there is provided the lens device according to the first or second aspect of the present invention, wherein the optical path for AF use is provided with an AF function by which a plurality of imaging areas of an imaging device for AF use for capturing an image for AF use are disposed at positions of a different optical path length from each other, and the focus of the optical system is controlled based on focus evaluation values indicating contrast values of each image captured by the plurality of imaging areas. The present invention exhibits the aspect of lens device using what is called an optical path length difference type AF.

According to the present invention, there is provided the lens device provided in the imaging optical system thereof with the vibration proof optical system for image shake correction and the light splitting optical system for AF use, wherein image shake correction is also effectively applied to a subject image for AF use focused using subject light branched by the light splitting optical system for AF use.

### BRIEF DESCRIPTION OF THE DRAWINGS

Fig. 1 is a configuration diagram illustrating the whole optical system of a lens device to which the present invention is applied;
Fig. 2 is a view showing a CCD for video use of the camera body and a pair of CDDs for AF use on the identical optical axis; and
Fig. 3 is an enlarged view of a part (vibration proof lens and half mirror) of the optical system.

### DETAILED DESCRIPTION OF THE PREFERRED EMBODIMENTS

A lens device according to the present invention will be described in detail below with reference to the accompanying drawings showing a preferred embodiment thereof.

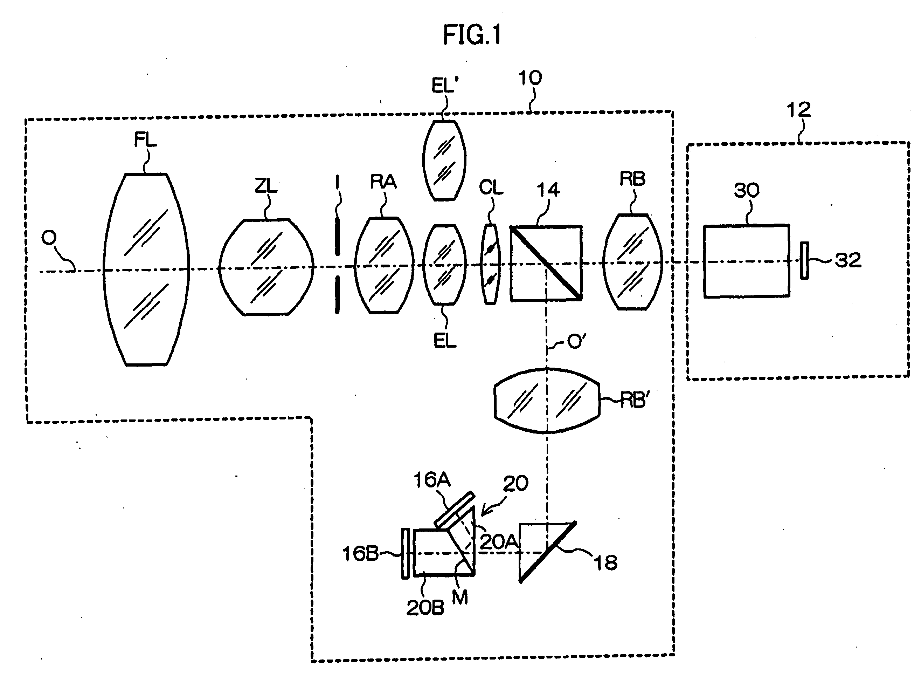

Fig. 1 is a configuration diagram illustrating the whole optical system of a lens device 10 to which the present invention is applied. The lens device 10, having the optical system illustrated in Fig. 1, is a lens device detachably mounted in a camera body 12 of broadcast-use or professional-use television camera, for example; the lens device 10 represents a box type EFP lens mostly mounted and used in a pedestal (pedestal dolly or the like) in a studio.

As illustrated in Fig. 1, the optical system of the lens device 10 includes: the main optical path along an optical axis O which guides subject light to the camera body 12; and the optical path for AF use along an optical axis O' branched from the optical path of the optical axis O. Arranged in the main optical path are, from the front side (subject side) rightward, a focus lens (group) FL, a zoom lens (group) ZL, an aperture I, a front side relay lens (group) RA, an extender lens (group) EL, a vibration proof lens CL, a half mirror (half prism) 14 and a rear side relay lens (group) RB.

Subject light from a subject incident on the optical system of the lens device 10 passes through these lens groups one after the other and then enters the optical system of the camera body 12. In the optical system of the camera body 12, there are arranged a color splitting optical system 30 for splitting the incident subject light into wavelengths of three colors, that is, red (R), green (G) and blue (B), and CCDs for video use provided for each color (R, G, B) for capturing images of each color of the split subject light. It is noted that the CCDs for video use of R, G and B disposed at positions of an optically equal optical path length are, as illustrated in Fig. 1, represented by a single CCD 32 for video use. The subject light incident on the imaging area of the CCD 32 for video use is photoelectrically converted by the CCD 32 for video use. Then, a video signal for recording or reproduction is generated by a given signal processing circuit in the camera body 12.

In a fixed lens barrel holding each lens, the aperture and the like, the focus lens FL and zoom lens ZL are each supported in such a manner as to be longitudinally movable in a direction of the optical axis O, and at the same time driven by a motor (not illustrated). When the focus lens FL moves, the focus position (in-focus position) changes; when the zoom lens ZL moves, the imaging magnification (focal length) changes.

The aperture I is opened/closed by a motor (not illustrated). When the position (opening) of the aperture I changes, the amount of subject light passing through the optical system changes.

The extender lens EL is a conversion lens for changing the imaging magnification to a predetermined value (for example, two times), and inserted and removed to the optical path of the optical axis O by a motor (not illustrated). Plural types of extender lenses EL and EL' can be inserted and removed on the optical path of the optical axis O; when the type of extender lens inserted in the optical path of the optical axis O is changed, the imaging magnification is varied to a different value.

The vibration proof lens CL is supported in such a manner as to be vertically and laterally movable on a plane perpendicular to the optical axis O, and driven by an actuator (not illustrated). When the vibration proof lens CL is displaced vertically and laterally, the focusing position of an image focused using subject light passing through the vibration proof lens CL is displaced vertically and laterally according to the displacement of the vibration proof lens CL. In the lens device 10, as the shake detection sensor that detects a vibration occurring in the camera (optical system), an angular velocity sensor is arranged, for example; an angular velocity signal obtained from the angular velocity sensor is integrated to determine a position (a displacement from the reference position) of the vibration proof lens CL for canceling the image shake and then the vibration proof lens CL is driven accordingly.

Meanwhile, on the optical path for AF use of the optical axis O' branched from the main optical path along the optical axis O by the half mirror 14, there are arranged a relay lens RB' for AF use equivalent to the rear side relay lens RB, a right angle reflection prism 18, a light splitting optical system 20 constituted of two prisms 20A and 20B, and CCDs 16A and 16B for AF use. In the half mirror 14, the subject light passing through the front side relay lens RA and then entering the half mirror 14 is divided into two. Of the incident subject light, the subject light passing through the half mirror 14 is, as described above, guided along the main optical path of the optical axis O to the camera body 12. The subject light reflected on the half mirror 14 is guided to the optical path for AF use of the optical axis O' substantially perpendicular to the optical axis O. Of the subject light incident on the half mirror 14, about 50% thereof passes through the half mirror 14, for example. In this case, as the half mirror 14, a half mirror of any given transmissivity and reflectivity can be used.

The subject light reflected on the half mirror 14 and then guided to the optical path for AF use passes through the relay lens RB' for AF use and is thereafter totally reflected on the right angle reflection prism 18 and then enters the light splitting optical system 20. The subject light incident on the light splitting optical system 20 is divided into two lines of subject light having an equal amount of light by a half mirror face M being the junction between the first prism 20A and second prism 20B. The subject light reflected on the half mirror face M is incident on the imaging area of the one CCD 16A for AF use; and the subject light passing through the half mirror face M is incident on the imaging area of the other CCD 16B for AF use.

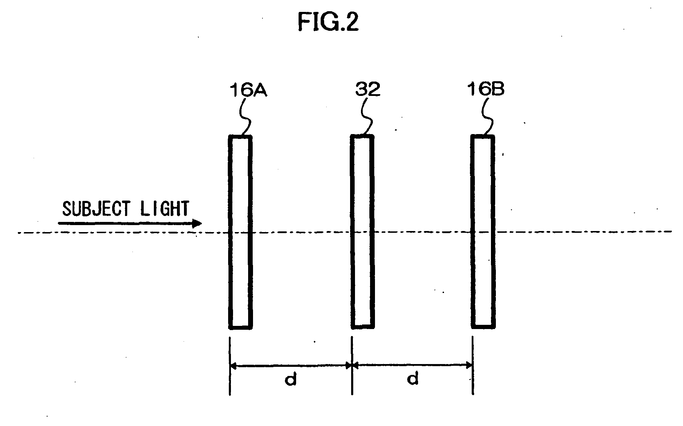

Video signals obtained by the CDDs 16A and 16B for AF use are used in the optical path length difference type AF. The optical path length difference type AF will now be briefly described. As illustrated in Fig. 2, when the CCD 32 for video use of the camera body 12 and a pair of the CDDs 16A and 16B for AF use are shown on the identical optical axis, the optical path length of subject light incident on the imaging area of the one CCD 16A for AF use is set shorter than the optical path length of subject light incident on the imaging area of the other CCD 16B for AF use; and in the reference state, the optical path length of subject light incident on the imaging area of the CCD 32 for video use is set to an intermediate length therebetween. That is, the imaging areas of a pair of the CDDs 16A and 16B for AF use are each disposed so as to be positioned at a longitudinally equal distance d from the imaging area of the CCD 32 for video use. Consequently, using a pair of the CDDs 16A and 16B for AF use, there are obtained video signals of the subject light incident on the imaging lens 10, which are equivalent to the video signals obtained when the imaging area of the CCD 32 for video use is disposed at a longitudinally equal distance from the current position thereof. In this case, the CDDs 16A and 16B for AF use don't need to produce color video signals; monochrome video signals (luminance signals) may be obtained from the CDDs 16A and 16B for AF use.

The video signals obtained by the CDDs 16A and 16B for AF use are each inputted to an AF processing unit (not illustrated) in the lens device 10, and focus evaluation values (focus evaluation values of ch A and ch B) indicating contrast values of the respective videos (images) captured by the CDDs 16A and 16B for AF use are detected in the AF processing unit. In the AF processing unit, only high frequency component signals are extracted from the inputted video signals by a high-pass filter (HPF) and thereafter the high frequency component signals are integrated field by field to determine a focus evaluation value. In this case, the determination of focus evaluation value is performed only for an image of a predetermined AF area (for example, a rectangular area at the center of screen) which is set in the imaging range (screen), whereby the object to be focused by use of AF is limited to the subject within the predetermined AF area.

The focus evaluation values (focus evaluation values of ch A and ch B) obtained in the AF processing unit from the respective video signals of the CDDs 16A and 16B for AF use are inputted to a focus control unit (not illustrated) in the lens device 10 for controlling the focus lens FL. In the focus control unit, the focus evaluation values of ch A and ch B are compared to detect a focus state (in-focus, front focus, rear focus), and then the focus lens FL is controlled so that the focus state changes to the in-focus state. Accordingly, the video captured by the CCD 32 for video use of the camera body 12 is automatically focused on the subject in the AF area.

By the way, referring to the optical configuration according to the present embodiment illustrated in Fig. 1, the vibration proof lens CL is disposed at a preceding stage (subject side) relative to the half mirror 14 for AF use. Thus, similarly to the video for recording or reproduction captured by the CCD 32 for video use of the camera body 12, image shake correction is also applied to the videos for AF use captured by the CDDs 16A and 16B for AF use. Consequently, the AF processing is performed by use of the image for AF use appropriate for the video for recording or reproduction having image shake reduced, so the focusing by AF is properly performed.

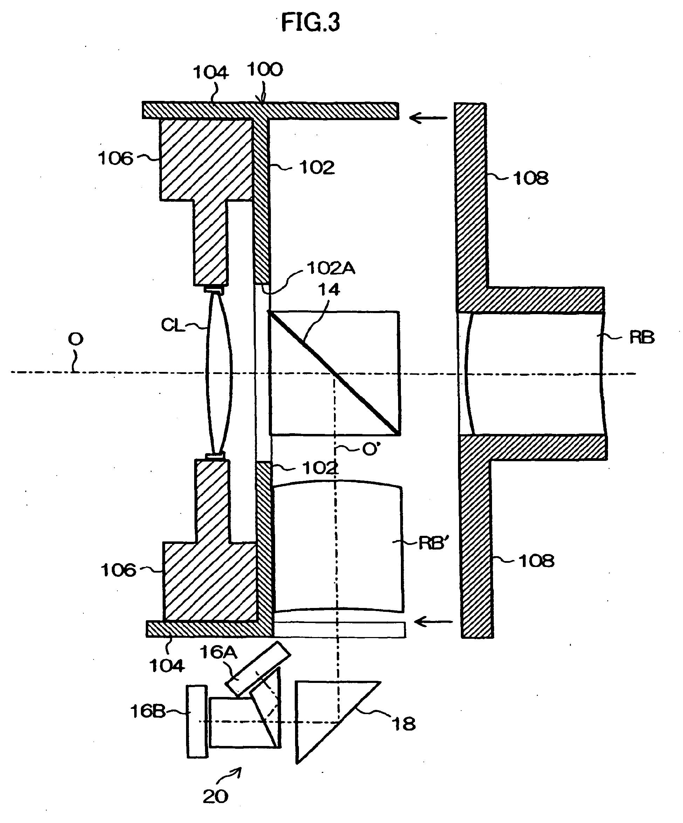

Fig. 3 is an enlarged view of that part of Fig. 1 in which the vibration proof lens CL and half mirror (half prism) 14 are disposed. Referring to Fig. 3, the supporting frame 100 constitutes one part of the fixed lens barrel, and is detachably mounted in the other parts constituting the fixed lens barrel by use of a screw or the like. The supporting frame 100 has: an internal wall 102 orthogonal to the optical axis O of the main optical path, having an opening 102A formed in a part around the optical axis O through which subject light passes; and an external wall 104 which surrounds the periphery of the vibration proof lens CL and half mirror 14. In the front side of the opening 102A of the inner wall 102, there is disposed the vibration proof lens CL, and at the same time in the supporting frame 100 in the front face side of the inner wall 102, there are disposed a supporting mechanism that supports the vibration proof lens CL in a vertically and laterally movable manner, and an actuator that vertically and laterally drives the vibration proof lens CL. Referring to Fig. 3, the supporting mechanism and actuator of the vibration proof lens CL are represented by a simplified figure 106.

Meanwhile, in the rear side of the opening 102 A of the inner wall 102, there is disposed the half mirror 14, and at the same time in the rear face of the inner wall 102, there is disposed a holding frame (not illustrated) of the half mirror 14. As illustrated in Fig. 1, at the rear stage of the half mirror 14, there is disposed the rear side relay lens RB; and the rear side relay lens RB is held by a supporting frame 108, and the supporting frame 108 is mounted in an opening of the rear side of the supporting frame 100 by use of a screw or the like.

Also, in Fig. 3, there are illustrated the relay lens RB' for AF use arranged on the optical path for AF, the right angle reflection prism 18, the light splitting optical system 20, and the CCDs 16A and 16B for AF use. These members are installed in a supporting frame (not illustrated) which is coupled to or formed integrally with the supporting frame 100.

According to the above configuration, the half mirror 14 for AF use is disposed at a rear stage relative to the vibration proof lens CL and at the same time the vibration proof lens CL and its drive mechanism and the optical system for AF use are integrated as one unit and incorporated into the lens device.

In the above description, there has been shown the embodiment of the technique of driving the vibration proof lens CL acting as an image shake correcting function, supported in a vertically and laterally movable manner in the main optical path of the optical system and thereby performing image shake correction. However, the present invention can be applied to a lens device using an image shake correcting function of another type which arranges a vibration proof optical system in the main optical path and performs image shake correction by use of the vibration proof optical system.

Also, in the above description, there has been shown the embodiment of the technique of performing focusing operation so as to have the in-focus state based on the contrast (focus evaluation values of ch A and ch B) of images captured by two imaging areas disposed at positions of a different optical path length from each other on the optical path for AF use. However, the present invention can also be applied to an embodiment which performs focusing operation so as to have the in-focus state based on the contrast of images captured by three or more imaging areas disposed at positions of a different optical path length from each other on the optical path for AF use. Further, the present invention can be applied not only to the optical path length difference type AF but also to an AF of any given type in which the light splitting optical system for AF use for branching subject light for AF use from the main optical path to the optical path for AF is disposed on the main optical path.

## Claims

1. A lens device (10) comprising:
an imaging optical system in which a vibration proof optical system (CL) for image shake correction is arranged in a main optical path for focusing a subject image for recording or reproduction and at the same time a light splitting optical system (14) for branching subject light from the main optical path to an optical path for AF use for focusing a subject image for AF use is arranged in the main optical path,
wherein the light splitting optical system (14) is disposed at a rear stage of the main optical path relative to the vibration proof optical system (CL),
**characterized in that**
the vibration proof optical system (CL), the light splitting optical system (14) and an optical system (20) for AF use are supported by the same supporting frame (100), which is detachably mounted in a fixed barrel of the lens device (10).

2. The lens device (10) according to claim 1, **characterized in that**
a plurality of imaging areas of an imaging device for AF (16A, 16B) use for capturing an image for AF use are disposed at positions of a different optical path length from each other, and the focus of the imaging optical system is controlled based on focus evaluation values indicating contrast values of each image captured by the plurality of imaging areas.

3. The lens device (10) according to claim 1 or 2, **characterized by**
a rear side relay lens (RB), which is held by a further supporting frame (108),
wherein the further supporting frame (108) is detachably mounted in the supporting frame (100).

## Patentansprüche

1. Linsenvorrichtung (10) umfassend:
ein optisches Bildgebungssystem, in welchem in einem Hauptstrahlengang zum Fokussieren eines Gegenstandsbildes für Aufnahme oder Reproduktion, ein vibrationsfestes optisches System (CL) zur Bildstabilisierung angeordnet ist und gleichzeitig zum Abzweigen von Gegenstandslicht von dem Hauptstrahlengang in einen Strahlengang zur AF-Anwendung zum Fokussieren eines Gegenstandsbildes zur AF-Anwendung, in dem Hauptstrahlengang ein optisches Lichtteilersystem (14) angeordnet ist,
wobei das optische Lichtteilersystem (14) relativ zu dem vibrationsfesten optischen System (CL) in einem hinteren Abschnitt des Hauptstrahlengangs angeordnet ist,
**dadurch gekennzeichnet dass,**
das vibrationsfeste optische System (CL), das optische Lichtteilersystem (14) und ein optisches System (20) zur AF-Anwendung durch den selben Trägerrahmen (100) getragen werden, welcher in einem festen Tubus der Linsenvorrichtung (10) abnehmbar angebracht ist.

2. Linsenvorrichtung (10) nach Anspruch 1, **dadurch gekennzeichnet, dass**
eine Mehrzahl von Bildgebungsbereichen einer Bildgebungsvorrichtung zur AF-Anwendung (16A, 16B) zum Erfassen eines Bildes zur AF-Anwendung, an Orten mit einer voneinander verschiedenen Strahlenganglänge angeordnet sind und der Fokus des optischen Bildgebungssystems auf der Basis von Fokus-Evaluierungswerten, welche Kontrastwerte von jedem der durch die Mehrzahl von Bildgebungsbereichen erfassten Bildern angeben, gesteuert wird.

3. Linsenvorrichtung (10) nach Anspruch 1 oder 2, **gekennzeichnet durch**
eine hintere Relaislinse (RB), welche **durch** einen weiteren Trägerrahmen (108) gehalten wird,
wobei der weitere Trägerrahmen (108) in dem Trägerrahmen (100) abnehmbar angebracht ist.

## Revendications

1. Dispositif à lentille (10), comprenant :
un système optique de formation d'image, dans lequel un système optique anti-vibrations (CL) destiné à une correction de tremblement d'image est agencé dans un trajet optique principal pour la mise au point d'une image de sujet en vue de l'enregistrement ou de la reproduction et, en même temps, un système optique de séparation de lumière (14), destiné à aiguiller la lumière de sujet du trajet optique principal à un trajet optique pour une utilisation AF (mise au point automatique) permettant la mise au point d'une image de sujet pour une utilisation AF, est agencé dans le trajet optique principal,
dans lequel le système optique de séparation de lumière (14) est disposé au niveau d'un étage arrière du trajet optique principal par rapport au système optique anti-vibrations (CL),
**caractérisé en ce que**
le système optique anti-vibrations (CL), le système optique de séparation de lumière (14), et un système optique (20) pour une utilisation AF sont portés par le même cadre de support (100), lequel est monté de manière amovible dans un corps fixe du dispositif à lentille (10).

2. Dispositif à lentille (10) selon la revendication 1, **caractérisé en ce que**
une pluralité de zones de formation d'image d'un dispositif de formation d'image pour une utilisation AF (16A, 16B), pour capturer une image pour une utilisation AF, sont disposées en des emplacements présentant une longueur de trajet optique différente les uns des autres, et le foyer du système optique de formation d'image est commandé en fonction de valeurs d'évaluation de foyer indiquant des valeurs de contraste de chaque image capturée par la pluralité des zones de formation d'image.

3. Dispositif à lentille (10) selon la revendication 1 ou 2, **caractérisé par**
une lentille de relais côté arrière (RB), maintenue par un cadre de support supplémentaire (108),
dans lequel le cadre de support supplémentaire (108) est monté de manière amovible dans le cadre de support (100).
